# EUROPEAN PATENT APPLICATION

(11) **EP 0 526 971 A2**
(43) Date of publication of application: **10.02.1993**
(21) Application number: 92305167.6
(22) Date of filing: 05.06.1992
(51) Int. Cl.: G08B 13/12

(54) **Improvement in security enclosures**

(30) Priority: 21.06.1991 GB 9113436
(71) Applicant: W.L. GORE & ASSOCIATES (UK) LTD, London WC2A 2JP (GB)
(72) Inventor: Macpherson, Hugh, Milnathort, Fife, Scotland (GB)
(74) Representative: MacDougall, Donald Carmichael

(57) **Abstract**

A security enclosure comprises two layers (12, 14) of electrically responsive fibrous material separated by a layer (16) of auto-combustible insulating material. The layers (12, 14, 16) extend over the whole area of the enclosure, and the length of the fibres of the fibrous material is greater than the thickness of the insulating material layer (16) so that piercing of the enclosure forces fibres from one of the fibrous material layers (12) to physically penetrate the insulating material layer (16) and contact the other fibrous material layer (14) to change an electrical characteristic of the fibrous material layers (12, 14). A detector (24) is provided to detect this change. In the event of attempted penetration through the layers (12, 14, 16) by means of laser or other non-physical penetration involving elevated temperature, the auto combustible insulating material layer (16) is ignited, the subsequent decomposition of the insulating layer (16) causing the electrically responsive layers (12, 14) to come into contact with one another to change a detectable electrical characteristic of the fibrous material layers (12, 14).

## Description

### FIELD OF INVENTION

This invention relates to improvements in security enclosures and in particular to improving the resistance of a security enclosure to unauthorised penetration using lasers or other non-physical cutting means involving elevated temperatures. The invention also relates to sheets and laminates for use in making such enclosures.

### BACKGROUND OF THE INVENTION

Security enclosures are used in the protection of items in transit or storage such as sensitive documents and magnetic information and may be used to contain components to which access is to be restricted, such as electronic circuits containing memory information. Documents and magnetic files containing security sensitive information have to be sent throughout the world and it is often necessary to ensure that the documents and files have not been interfered with in transit or that if any attempt is made to reveal the information by an unauthorised person an alarm is sounded or the information destroyed or erased. Printed circuit boards, computers and data conversion equipment often contain memory devices which must be secured against unauthorised access. Any attempt to tap onto the board or device should ideally result in erasure or all memory information.

The enclosure should provide protection from many forms of attack, from very crude destructive attacks to highly sophisticated laboratory attacks, but at the same time be sufficiently insensitive as not to be triggered by normal environmental effects such as temperature, humidity and vibration.

U.K. Patent Application No. GB 2220513A to W. L. Gore & Associates Inc. discloses a security closure suitable for the above described applications. The enclosure is formed from layers of flexible material, one layer carrying flexible semi-conductive lines which extend over the whole area of the enclosure and are arranged to define a conductive matrix. Any interruption of the lines by an unauthorised opening of the enclosure changes the resistance of the line and so can be detected by a monitoring circuit. Further, two layers of semi-conductive fibres also cover the enclosure and are separated by an insulating layer. The length of the fibres is greater than the thickness of the insulating layer so that if the enclosure is pierced fibres from one layer will be forced into contact with fibres from the other layer. This will change the combined resistance of the layers and this change can also be detected by a monitoring circuit. It is noted in the application that the two measures may be used separately. Indeed, U.K. Patent Application GB 2212644A, also in the name of W. L. Gore & Associates Inc, relates to a data transmission line including two semi-conductive layers separated by an insulating layer. At least the outer semi-conductive layer is made of fibrous material such as carbon loaded PTFE such that when a sharp object pierces this layer and the insulating layer, semi-conductive fibres are dragged from the outer layer into contact with the inner semi-conductive layer, which serves as a signal carrying element, and forms a conductive bridge between the layers. This change in the resistance of the conductive path including the inner and outer layers and a far end termination may be detected to provide notice of the penetration.

While the use of such semi-conductive layers of fibrous material has been found effective in use in detecting physical penetration, such enclosures, whether in the form of envelope-type security enclosures or in the form of sheets or components of data transmission lines, may be subject to highly sophisticated attacks involving the use of lasers or other non-physical or non-intrusive cutting means. This means of attempting to gain entry to an enclosure or container has been specifically addressed in British Patent No. 1375926 to GAO Gesellschaft Fur Automation und Organisation mbH. The patent relates to a security container the walls of which are lined with an electrically non-conductive foil into which one or more loops of electrical conductors are embedded. The document proposes the use of an opaque plastic material for the foil which has the same or higher melting point than the insulating material covering the conductors. It is suggested that as a result, attempts at welding or melting will positively produce a short circuit. It would appear however, that production of a short circuit would require movement of adjacent exposed conductors into contact with one another.

### SUMMARY OF THE INVENTION

The present invention provides laminates, or enclosures formed of such laminates, including elements which, when undisturbed, exhibit a detectable electrical characteristic. When subject to elevated temperatures, such as would be experienced if a laser were being used to penetrate a laminate, the electrical characteristic is subject to a detectable change.

According to one aspect of the present invention there is provided a security enclosure comprising two layers of electrically responsive fibrous material separated by a layer of auto-combustible insulating material. The layers extend over the whole area of the enclosure, and the length of the fibres of the fibrous material is greater than the thickness of the insulating material layer so that piercing of the enclosure forces fibres from one of the fibrous material layers to physically penetrate the insulating material layer and contact the other fibrous material layer to change an electrical characteristic of the fibrous material layers. Detection means are provided to detect this change. In the event of attempted penetration through the layers by means of laser or other non-physical penetration involving elevated temperature, the auto-combustible insulating material layer is ignited, the subsequent decomposition of the insulating layer causing the electrically responsive layers to come into contact with one another to change a detectable electrical characteristic of the fibrous material layers.

Preferably, the insulating material is an auto-pyrotechnic material which burns violently to assure interruption of the insulating layer. The auto-pyrotechnic material may be paper and the like impregnated with sodium chlorate, potassium nitrate or potassium chlorate, or some other suitable material.

Preferably, the electrically responsive fibrous material is a semi-conductive material.

According to a further aspect of the present invention there is provided a laminate for use in forming a security enclosure, the laminate comprising two layers of electrically responsive material separated by a layer of auto-combustible insulating material. In the event of an attempted penetration through the laminate by means of laser or other non-physical penetration involving elevated temperature, the auto-combustible insulating material layer is ignited, the subsequent breakdown of the insulating layer causing the electrically responsive layers to come into contact with one another to change a detectable electrical characteristic of the electrically responsive layers.

The laminate may be formed in sheets, to be folded to form enclosures, or may be provided in tubular form, for example to provided protective sheaths for data transmission lines.

### BRIEF DESCRIPTION OF DRAWING

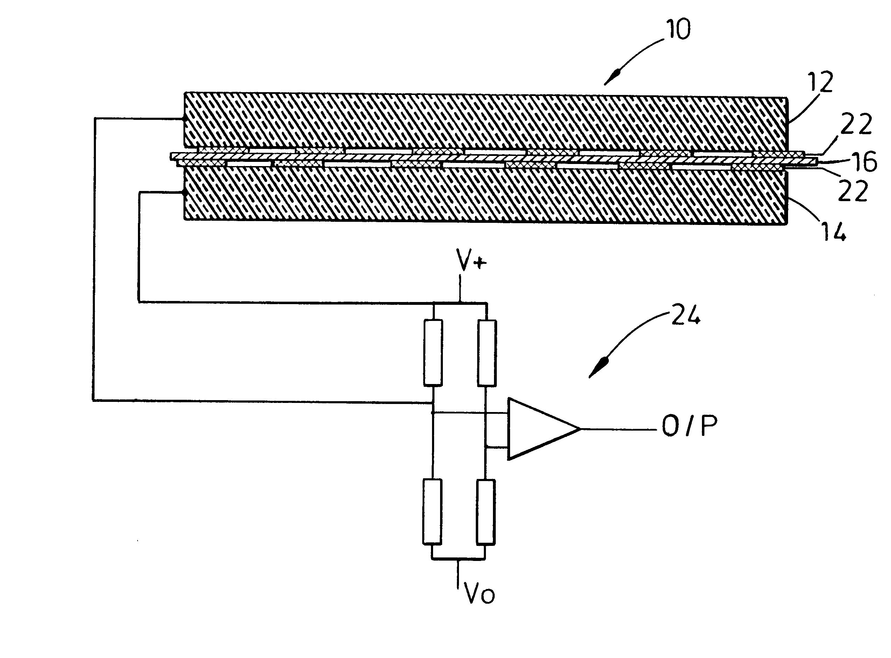

These and other aspects of the present invention will now be described, by way of example, with reference to the accompanying drawing which is a schematic sectional view of a laminate for use in forming a security enclosure, including a diagram of a monitoring circuit, in accordance with a preferred embodiment of the present invention.

### DETAILED DESCRIPTION OF DRAWING

The present invention relates to security enclosures and to sheets and laminates for use in making such enclosures. The sheets are formed of two layers of electrically responsive material separated by a layer of insulating material. The electrical characteristics of one or both of the layers of electrically responsive material may be monitored, interference or attempted penetration of the sheet resulting in a detectable change in the monitored electrical characteristics. A detected change in the monitored electrical characteristics may be used to activate means to, for example, give warning or erase information contained on an object within the enclosure. In its broadest aspect, the invention provides a heat sensitive layer between the electrically responsive layers which, when subject to elevated temperature, produce a change in the electrical insulation between the electrically responsive layers and produces a change in an electrical characteristic of one or both of the layers and which change may be detected. A change in the quality of the insulation between the electrically responsive layers may be effected by providing an electrical connection between the electrically responsive layers, through degrading or damaging the insulation between the electrically responsively layers, as will be described with reference to the drawing.

The Figure shows a flexible sheet 10 comprising two layers 12, 14 of electrically responsive fibrous material, in the form of semi-conductive fibrous material, separated by a layer 16 of flexible auto-combustible, and preferably auto-pyrotechnic insulating material. Adhesive, preferably low molecular weight polyester, applied in a non-continuous pattern 22 (thickness somewhat exaggerated in drawing), is used to adhere the fibrous layers 12, 14 to the insulating layer 16.

In use, if a sharp object penetrates the fibrous layers 12, 14 the object will pull fragments of the upper fibrous layer 12 through the intervening insulating layer 16 to touch, and to make electrical contact with, the lower fibrous layer 14. In order to have a high probability of a conductive path being formed, the combined thickness of the insulating layer 16, and the adhesive 22 should be thinner than the mean length of the conductive fibres produced by pushing an object through the semi-conductive fibrous layer 12. The combined thickness of the further layers and adhesive should therefore be no more than and preferably thinner than, the fibrous layer 12.

Typically,the thickness of the fibrous layers 12, 14 may be 0.075 mm and the thickness of the insulating layer 16 no more than 0.025 mm and preferably around 12 microns. The preferred semi-conductive fibrous material is low densified conductive polytetrafluoroethylene (PTFE) having a volume resistivity of typically from 1 to 10 ohms - cm.

The insulating layer 16 is paper impregnated with sodium chlorate, potassium nitrate or potassium chlorate. In use, if a laser or other non-intrusive elevated temperature cutting means penetrates the layers the heat will ignite the insulating layer 16. The subsequent decomposition of the insulating layer 16 will result in the semi-conductive fibrous layers 12, 14 coming into contact with one another.

The sheet 10 may be combined with further laminates, such as described in U.K. Patent Application GB 2220513A, before being formed into a suitable enclosure, or may be formed as a tubular sheath or as part of a data transmission line, as described in U.K. Patent Application GB 2212644A.

The enclosure includes a suitable monitoring circuit 24, preferably of the comparator type. The circuit 24 is connected to the fibrous layers 12, 14 and will produce an output to trigger, for example, an alarm if any change in the electrically characteristics of the layers 12, 14 is detected. In this particular example, each layer 12, 14 is maintained at a monitored reference voltage. Thus, if an attempted interception is made by piercing, semi-conductive fibres will be drawn from one semi-conductive layer 12, 14 to the other causing a detectable short circuit. Similarly, if laser or other heat producing means is used to penetrate the sheet 10, the insulating layer 16 will be ignited and decompose and also result in a short circuit.

Thus it will be seen that the present invention, as illustrated by means of the above described preferred embodiment, provides sheets and laminates which may be formed into security enclosures which are secure against penetration by physical means and also by means of penetration by lasers and the like.

It will be clear to those of skill in the art that the above described embodiment is merely exemplary of the present invention and that further modifications and improvements may be made without departing from the scope and spirit of the invention. It is, for example, not essential that the monitoring circuit used in conjunction with the sheet measure electrical potential, and a suitable circuit might monitor other electrical characteristics of the layers. Also, in certain applications where physical penetration of the layers is not considered a threat or other precautionary measures are provided, the electrically responsive layers need not necessarily be of fibrous material.

## Claims

1. A laminate (10) for use in forming a security enclosure, the laminate (10) comprising two layers (12, 14) of electrically-responsive material separated by a layer (16) of auto-combustible insulating material, an attempted penetration through the laminate by means of laser or other non-physical penetration involving elevated temperature igniting the auto combustible insulating material layer (16) and the subsequent breakdown of the insulating layer (16) causing the electrically responsive layers (12, 14) to come into contact with one another to change a detectable electrical characteristic of the electrically responsive layers (12, 14).

2. The laminate of claim 1 wherein the insulating material is an auto-pyrotechnic material which burns violently to assure interruption of the insulating layer (16).

3. The laminate of claim 2 wherein the auto-pyrotechnic material is paper impregnated with sodium chlorate, potassium nitrate or potassium chlorate.

4. The laminate of claims 1, 2 or 3 wherein the electrically responsive material is a fibrous material and the length of the fibres of the material is greater than the thickness of the insulating material layer (16) so that piercing of the laminate (10) forces fibres from one of the fibrous material layers (12) to physically penetrate the insulating material layer (16) and contact the other fibrous material layer (14) to change an electrical characteristic of the fibrous material layers (12, 14).

5. The laminate of claim 4 wherein the electrically responsive fibrous material is a semi-conductive material.

6. A security enclosure comprising two layers (12, 14) of electrically responsive material separated by a layer (16) of auto-combustible insulating material, the layers (12, 14, 16) extending over the whole area of the enclosure, and detection means (24) for detecting a change in an electrical characteristic of the electrically responsive material layers (12, 14), an attempt to penetrate through the layer by means of laser or other non-physical penetration involving elevated temperature igniting the auto combustible insulating material layer (16) and the subsequent decomposition of the insulating layer (16) causing the electrically responsive layers (12, 14) to come into contact with one another to change said electrical characteristic.

7. The laminate of claim 6 wherein the insulating material is an auto-pyrotechnic material which burns violently to assure interruption of the insulating layer (16).

8. The laminate of claim 7 wherein the auto-pyrotechnic material is paper impregnated with sodium chlorate, potassium nitrate or potassium chlorate.

9. The laminate of claims 6, 7, or 8 wherein the electrically responsive material is a fibrous material and a length of the fibres of the material is greater than the thickness of the insulating material layer (16) so that piercing of the laminate (10) forces fibres from one of the fibrous material layers (12) to physically penetrate the insulating material layer (16) and contact the other fibrous material layer (14) to change an electrical characteristic of the fibrous material layers (12, 14).

10. The laminate of claim 9 wherein the electrically responsive fibrous material is a semi-conductive material.

11. The laminate of any one of the preceding claims wherein reference voltages are applied to the fibrous material layers (12, 14) and the detection means (24) detects a change in potential between the layers (12, 14).
